# EUROPEAN PATENT APPLICATION

(11) **EP 1 538 854 A2**
(43) Date of publication of application: **08.06.2005**
(21) Application number: 04104795.2
(22) Date of filing: 30.09.2004
(51) Int. Cl.: H04Q 7/28

(54) **Communication units, wireless communication system and method of communication therein**

(30) Priority: 04.12.2003 GB 0328112
(71) Applicant: MOTOROLA, INC., Schaumburg, IL 60196 (US)
(72) Inventor: Yannay, Alon, 67899 Tel Aviv (IL); Bar, Eitan, 67899 Tel Aviv (IL); Nissim, Rami, 67899 Tel Aviv (IL)
(74) Representative: McCormack, Derek James

(57) **Abstract**

A wireless subscriber communication unit (300) is capable of communication on a direct mode communication system (100). The wireless subscriber communication unit (300) comprises a receiver and a signal processor (308), operably coupled to the receiver, for processing a received message relayed from an intermediary communication unit (150). The signal processor (308) comprises a group call processing function (340) configured to identify from the received message one or more call groups supported by the intermediary communication unit (150). An intermediary communication unit, a method of communicating, a direct mode communication system and a radio frequency transmission message are also provided. In this manner, by provision of a mechanism to allow an intermediary communication unit such as a gateway or repeater to indicate the DMO call groups that it supports, the efficiency of using group calls in, for example, a TETRA DMO communication system is improved.

## Description

### Field of the Invention

This invention relates to group calls in a wireless direct mode communication system. The invention is applicable to, but not limited to, transmission of an improved usage restriction element in a signal, for example in a TETRA direct mode wireless communication system.

### Background of the Invention

In a wireless private mobile radio (PMR) communication system, it is known that a wireless subscriber unit may operate outside a dedicated network coverage area by communicating in a direct communication link with at least one other wireless subscriber unit. Such a communication mode is generally referred to as Direct Mode Operation (DMO). This term is in contrast to Trunked Mode operation (TMO) that enables the wireless subscriber unit to work within network coverage, with communications controlled and facilitated by a switching and management infrastructure (SwMI).

Hence, when a wireless subscriber unit operates in DMO, there is no system controller and therefore no centralised timing synchronisation or infrastructure-controlled power control to help minimise interference. The wireless subscriber units are typically either vehicular-mounted 'mobile' or 'hand-portable' radio or cellular units. Henceforth, the term mobile station (MS) will be used for all such subscriber units.

In wireless DMO communication systems, there are typically two methods of communicating between MSs. A first method is a direct communication between two MSs, as provided for in 'direct-mode' communication in a PMR communication system. Here, a first MS is able to set up a direct communication with a second MS. A second method uses one or more intermediary unit(s) to forward a communication received from, one MS to another MS.

In the DMO variant of the Terrestrial Trunked Radio (TETRA) communication system, such intermediary DM units broadcast information to MSs in periodic transmissions of a presence signal. The signal includes a usage restriction type (URT) element that contains one to three addresses. This element is described in the TETRA DMO standard as defined by the European Telecommunication Standards Institute (ETSI) in EN 300 396-4 TETRA DMO type 1 Repeater Air interface, and ETS 300 396-5 TETRA DMO Gateway Air interface. Clause 10.3.1 of the Repeater Air interface specification states that:
"The addressing for URT = 0010 element contains a single 24-bit mobile network identity (MNI). DM-MSs with this MNI are permitted to initiate transactions through the DM-REP for the indicated validity time."

However, the inventors of the present invention have recognised and appreciated that the TETRA DMO standard only uses the URT element to define those 'source' addresses that are permitted to initiate service requests. In this regard, the TETRA DMO standard fails to define those destination addresses that are actually supported.

In practice, there is generally little problem in supporting any individual address (ITSI) as a destination address. However, the inventors of the present invention have further recognised and appreciated that there is a problem with the current TETRA DMO standard in supporting any group (destination) address (GTSI). For example, a gateway must attach a TMO group address on the TETRA network before using it. The gateway will usually employ a 1:1 mapping between a DMO group address and a TMO group address. Hence, the gateway will always support a limited number of DMO group addresses (GTSIs) at a particular time.

Therefore, and notably, the gateway may not support any DMO group address if the address does not have an attached (corresponding) TMO group. Consequently, an MS that does not know which group addresses are supported by the gateway may be rejected service. Such failed call attempts reduce the usage efficiency of the communication resource. In particular, such rejected call attempts block or delay other entities accessing the channels.

In addition, the inventors of the present invention have recognised and appreciated a further problem in the standardised use of a URT element for the case when only a limited number of prospective gateways or repeaters is able to route a communication to a given destination address identified by the GTSI. For example, let us assume that several gateways exist and transmit a presence signal on the same channel. All gateways could then be a valid option for usage by the MS. However, only one or two specific gateways may actually support the destination address that the MS needs. In such a scenario, the MS has no mechanism by which to select the correct gateway(s).

A yet further problem emanates from a scenario when several gateways exist on the same channel, and some are connected to the same network and support the same TMO group(s). In this scenario, all these gateways could set up simultaneously the same call on the same DMO channel. Such collisions are not allowed.

Thus, there exists a need to provide a wireless subscriber communication unit, an intermediary communication unit, a wireless communication system and method of operation wherein the aforementioned disadvantages may be alleviated.

### Statement of Invention

In accordance with a first aspect of the present invention there is provided a wireless subscriber communication unit. The wireless subscriber communication unit is capable of communication on a direct mode communication system. The wireless subscriber communication unit comprises a receiver and a signal processor, operably coupled to the receiver, for processing a received message relayed from an intermediary communication unit. The signal processor comprises a group call processing function configured to identify a number of call groups supported by the intermediary unit from the received message.

In this manner, for example, in a TETRA DMO communication system, an intermediary communication unit such as a gateway or repeater identifies a number of call groups supported by the gateway or repeater. Thus, the wireless subscriber communication units have knowledge of the group calls supported by the respective gateways or repeaters and are able to make informed and better decisions.

In accordance with a second aspect of the present invention there is provided an intermediary communication unit capable of routing communication on a direct mode communication system. The intermediary communication unit comprises a transceiver and a signal processor, operably coupled to the transceiver, for processing a received message comprising a usage restriction element. The intermediary communication unit's signal processor is configured to automatically update the received message such that the message subsequently comprises a number of call groups supported by the intermediary unit in any retransmission of the message.

In accordance with a third aspect of the present invention, there is provided a method of communicating in a wireless direct mode communication system that supports communication between a number of wireless communication units via an intermediary communication unit. The method comprises the steps of monitoring a communication channel by a wireless subscriber communication unit; and processing a received message from an intermediary communication unit. The method further comprises the steps of determining, in response to the processed message, whether the intermediary communication unit supports a number of call groups and is usable by the wireless subscriber communication unit. The identifier is added to a list of usable intermediary communication units contained within a memory element of the wireless subscriber communication unit, to indicate that the intermediary communication unit is usable by the wireless subscriber communication unit for communication to one or more call groups.

In accordance with a fourth aspect of the present invention, there is provided a storage medium storing processor-implementable instructions, as claimed in Claim 15.

In accordance with a fifth aspect of the present invention, there is provided a radio frequency transmission message, as claimed in Claim 16.

In accordance with a sixth aspect of the present invention, there is provided a wireless direct-mode communication unit as claimed in Claim 17.

In accordance with a seventh aspect of the present invention, there is provided a wireless direct-mode communication system, as claimed in Claim 18.

Further aspects of the invention are as provided in the dependent Claims.

### Brief Description of the Drawings

Exemplary embodiments of the present invention will now be described, with reference to the accompanying drawings, in which:
FIG. 1 illustrates a simplified diagram of a TETRA DMO communication system adapted in accordance with preferred embodiments of the present invention;
FIG. 2 illustrates a flowchart of a mechanism employed by a gateway or repeater to modify a message in a TETRA DMO communication system according to the preferred embodiments of the present invention;
FIG. 3 illustrates a wireless communication unit adapted in accordance with preferred embodiments of the present invention; and
FIG. 4 illustrates a flowchart of a mechanism to support group calls via a gateway or repeater in a TETRA DMO communication system according to the preferred embodiments of the present invention.

### Description of Preferred Embodiments

The inventive concepts of the present invention are described with reference to supporting group calls in a TETRA DMO communication system that utilises gateways or repeaters as intermediary communication units between two or more MSs. Nevertheless, it is within the contemplation of the present invention that the inventive concepts are equally applicable to other wireless direct mode communication systems which may employ alternative intermediary communication units.

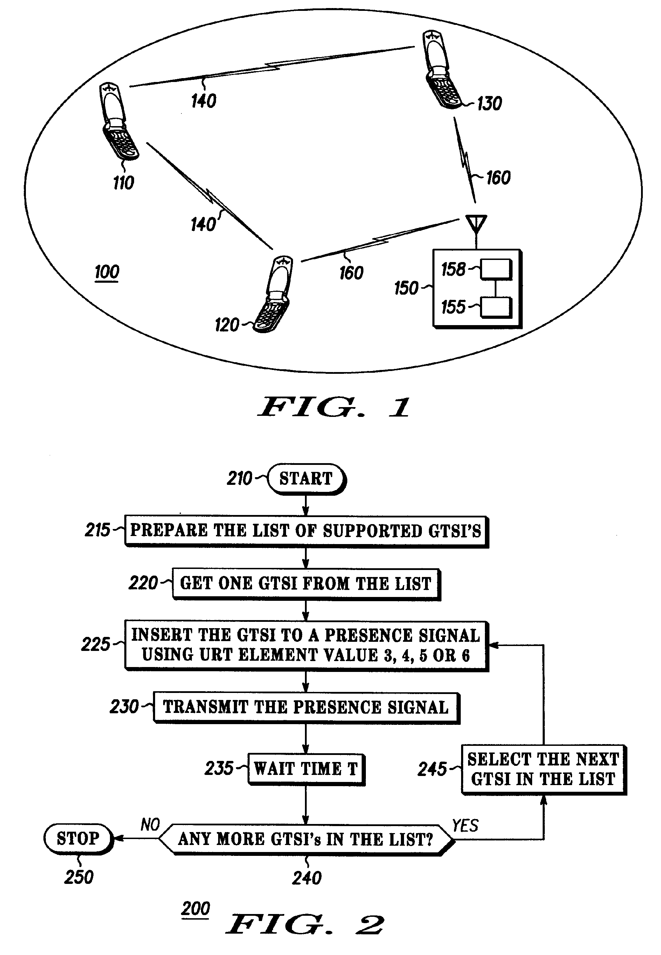

In wireless DMO communication systems, such as that illustrated in FIG. 1, there are typically two methods of communicating between MSs. A first method is a direct communication between two MSs, as provided for in 'direct-mode' communication in a PMR communication system. Here, a first MS 110 is able to set up a direct communication 140 with a second MS 120 or a third MS 130. In a true DMO communication system many MSs will be able to communicate with each other at any instant in time, with only three MSs 110, 120 and 130 shown in FIG. 1 for clarity purposes.

A second method, which provides the focus of the present invention and that is able to benefit from the inventive concepts described herein, uses one or more intermediary communication unit(s) 150 to forward a communication 160 received from, say the second MS 120 to be re-transmitted or routed to, say, the third MS 130. The intermediary communication unit is preferably a gateway or repeater that includes a radio frequency transceiver circuit 158 operably coupled to a signal processor function 155. In the DMO variant of the TErrestrial Trunked RAdio (TETRA) communication system, such intermediary DM communication units broadcast information to MSs in periodic transmissions of a presence signal. A presence signal, in this context, is an element that informs the receivers that the intermediary unit exists on the channel, the type of the unit, and what population may use it. In particular, the signal includes a usage restriction type (URT) element that contains between one and three addresses. This element is described in the TETRA DMO standard as defined by the European Telecommunication Standards Institute (ETSI) in EN 300 396-4 TETRA DMO type 1 Repeater Air interface, and ETS 300 396-5 TETRA DMO Gateway Air interface, and is incorporated herein by reference.

In accordance with the preferred embodiment of the present invention, a processor function 155 within the gateway or repeater has been adapted to modify any URT element of a transmission that passes through the unit. In particular, and advantageously, the inventive concepts described herein provide a mechanism for the intermediary communication unit to identify whether it supports certain DMO group calls.

This is achieved by the respective gateway and/or repeater modifying the meaning of the URT element within a message that is routed through the unit, i.e. modify the meaning of URT element to provide an indication of one or more TMO/DMO group(s) supported by the unit. This information, when processed by a MS, enables the MS to select intelligently a gateway or repeater to use when setting up DMO group calls.

TETRA DMO Gateways and repeaters have the present capability to indicate the following:
(i) URT=0: meaning 'no restrictions' on routing a call;
(ii) URT=1: meaning 'restricted by prior arrangement' on routing a call;
(iii) URT=2: meaning the routing of a call is 'restricted to a single MNI', where the mobile network identity (MNI) value is provided within the presence signal; and
(iv) URT=3, 4, 5 or 6: providing the ability to offer different combinations of one, two or three terminal subscriber identities (TSIs), where each TSI can be a group TSI (GTSI) or an individual TSI (ITSI).

Note that in the existing standard, the address of an ongoing call is not provided in the presence signal, but rather by dedicated "call management" signals.

In every transmission of a presence signal one of the above is present (URT=0-7). In accordance with the preferred embodiment of the present invention, it is envisaged that in different transmissions of presence signals, the gateway or repeater is able to modify the URT element and use different URT values. Hence, the processor function 155 of the gateway or repeater 150 can generate a large number of alternative meanings to the URT element. One example would be to generate a bitmap indicating two GTSIs that are supported and later providing two alternative bitmaps to represent an alternative two GTSIs.

Thus, in accordance with the preferred embodiment of the present invention, a new meaning is provided to any GTSI value in the URT of the presence signal. In this regard, the GTSI in the URT element shall not only indicate the group that is permitted to use the intermediary communication unit, but additionally any DMO group calls supported by the intermediary communication units.

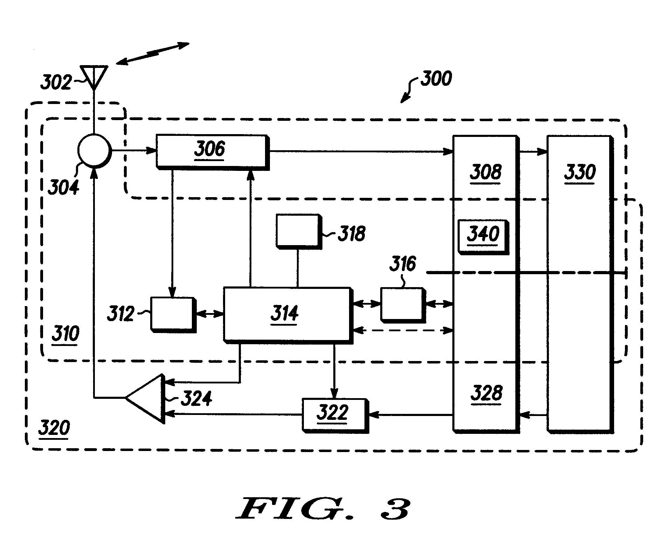

As known in the art, the processor function 155 of the gateway or repeater 150 is connected to known radio frequency transceiver circuitry, as described below in FIG. 3 with reference to a wireless subscriber unit. A gateway or repeater comprises basic transceiver elements that (typically) perform a minimum amount of signal processing and signal manipulation in receiving and retransmitting messages, as known in the art. As such, the overall functionality of the modified gateway or repeater, apart from the adapted functionality of the gateway's/repeater's signal processor, will not be further described here.

Referring now to FIG. 2, a flowchart 200 illustrates a mechanism that is preferably employed by a gateway or repeater to modify a message, such as a presence signal in a TETRA DMO communication, according to the preferred embodiments of the present invention. The gateway or repeater preferably modifies the presence signal by first preparing a list of GTSIs that it supports, as shown in step 215. The gateway or repeater then obtains one GTSI from the list, in step 220, and inserts the GTSI into the presence signal using URT element value=3, 4, 5 or 6, as in step 225, the meaning of which is described later.

The gateway or repeater then transmits the presence signal in step 230 and waits a period of time 'T' in step 235. The gateway or repeater then determines whether there is/are any more GTSIs in the list, in step 240. If there is/are no more GTSIs in the list, in step 240, the presence signal is complete with the GTSI(s), as shown in step 250. If there is/are any more GTSIs in the list, in step 240, the gateway or repeater selects the next GTSI in the list, in step 245, and inserts this new GTSI into the presence signal using URT element value=3, 4, 5 or 6, as in step 225, and the process continues.

In this manner, a gateway or repeater is able to modify the URT value and apply its own meaning to the URT portion of the presence signal.

It is envisaged that each gateway or repeater in the DMO network is configured to automatically update any URT values in messages routed through their unit. For example, such updating preferably comprises updating the set of groups currently attached on their TMO network. In this context, a gateway connects between the DMO side of the communication system and the TMO side. In practice, the gateway only needs a rule how to map every DMO address to a TMO address, and vice versa. It is logical that this mapping will be 1:1, however this is not mandated in the TETRA standard.

The MS on the DMO side sees only the DMO address and does not know to what TMO address it is mapped. Typically every gateway has a TMO/DMO address association. If a TMO address is supported by the gateway and is attached on the TETRA network, then the associated DMO address is also supported and can be inserted to the presence signal URT element in accordance with the preferred embodiment of the present invention. However, if a TMO address is not supported, or not attached to the TETRA system, the associated DMO address will not be inserted to the presence signal.

Referring now to FIG. 3, there is shown a block diagram of a wireless subscriber unit 300 adapted to support the inventive concepts of the preferred embodiments of the present invention. In general, such wireless subscriber units 300 contain an antenna 302 preferably coupled to a duplex filter or antenna switch 304 that provides isolation between a receiver chain 310 and a transmitter chain 320 within the wireless subscriber unit 300. As known in the art, the receiver chain 310 typically includes receiver front-end circuitry 306 (effectively providing reception, filtering and intermediate or baseband frequency conversion). The front-end circuit is serially coupled to a signal processing function 308. An output from the signal processing function is provided to a user-interface 330, which may comprise a display, speaker, etc.

The receiver chain 310 also includes received signal strength indicator (RSSI) circuitry 312 (shown coupled to the receiver front-end 306, although the RSSI circuitry 312 could be located elsewhere within the receiver chain 310). The RSSI circuitry is coupled to a controller 314 for maintaining overall subscriber unit control. The controller 314 is also coupled to the receiver front-end circuitry 306 and the signal processing function 308 (generally realised by a digital signal processor (DSP)). The controller 314 may therefore receive bit error rate (BER) or frame error rate (FER) data from recovered information. The controller 314 is coupled to the memory element 316 for storing operating regimes, such as decoding/encoding functions and the like. A timer 318 is typically coupled to the controller 314 to control the timing of operations (transmission or reception of time-dependent signals) within the wireless subscriber unit 300.

As regards the transmit chain 320, this essentially includes the user-interface 330 comprising one or more input elements such as a microphone, keypad, etc. coupled in series to a transmitter/modulation circuit 322. Thereafter, any transmit signal is passed through a radio frequency (RF) amplifier chain 324 to be radiated from the antenna 302. The transmitter/modulation circuitry 322 and the amplifier chain 324 are operationally responsive to the controller, with an output from the amplifier chain 324 coupled to the duplex filter or antenna switch 304. The transmitter/modulation circuitry 322 and receiver front-end circuitry 306 preferably comprise frequency up-conversion and frequency downconversion functions (not shown).

In particular, the operation of the signal-processing unit 308 has been adapted to provide a URT processing function 340, which supports DMO group call communications with the new meaning of the URT element. In this regard, the URT processing function 340 is able to identify one or more destination addresses using the embedded URT element within the received message, thereby providing the opportunity for supported destination addresses to request a service.

Furthermore, in accordance with the preferred embodiment of the present invention, the memory element 316 of the wireless subscriber unit 300 has been adapted to enable the URT processing function 340 to store a list of contactable gateways and repeaters. Additionally, the memory element 316 of the wireless subscriber unit 300 has been preferably adapted to store for each contactable gateway and/or repeater the set of GTSIs that each gateway/repeater supports. In this manner, the signal processor 308 of the wireless subscriber unit 300 is able to select the best gateway or repeater that supports the group call addressing requirements of the wireless subscriber unit 300.

It is envisaged that the various adapted components within the MS and/or intermediary communication unit can be realised in discrete or integrated component form. More generally, the functionality associated with generating or responding to a message that indicates the DMO group call capabilities of an intermediary communication unit, may be implemented in the respective communication unit in any suitable manner. For example, new apparatus may be added to a conventional communication unit, or alternatively existing parts of a conventional communication unit may be adapted, for example by reprogramming one or more processors or memory elements therein. As such, the required adaptation may be implemented in the form of processor-implementable instructions stored on a storage medium, such as a floppy disk, hard disk, programmable read-only memory (PROM), random access memory (RAM) or any combination of these or other storage media.

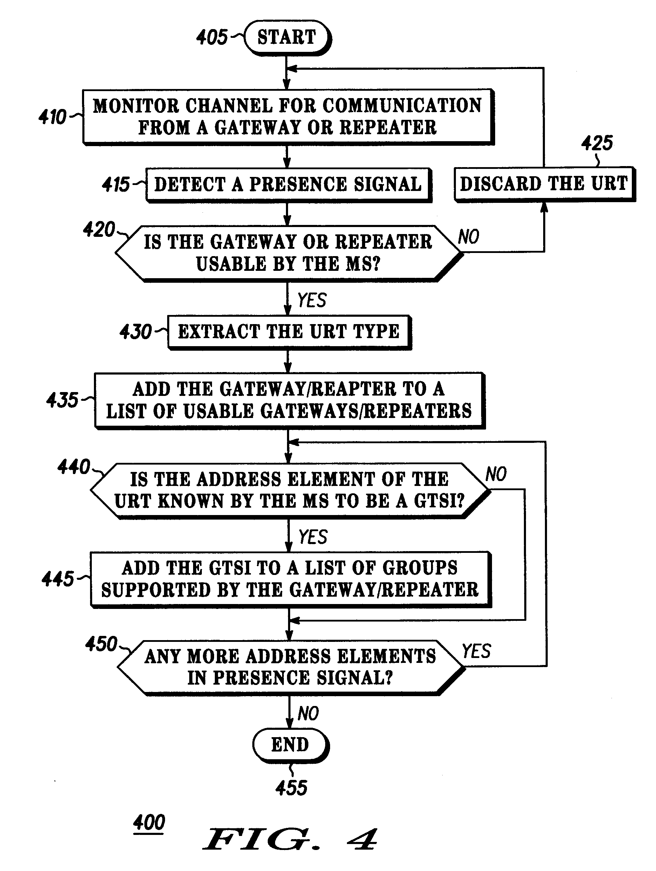

Referring now to FIG. 4, a flowchart 400 illustrates a preferred mechanism to support group calls via a gateway or repeater in a TETRA DMO communication system, according to the preferred embodiments of the present invention. The process starts with a DMO MS at step 405. The DMO MS monitors the communication channel, in the known manner, awaiting a communication from a gateway or repeater, as shown in step 410. When a communication is received from a gateway or repeater, a signal processor in the DMO MS detects a presence signal in step 415. The signal processor of the DMO MS then determines whether the gateway or repeater is usable by the DMO MS in step 420, i.e. if the URT indicates its ITSI or a GTSI that it is affiliated to. If the gateway or repeater is unusable by the DMO MS in step 420, the DMO MS discards the URT element and consideration of this gateway or repeater in step 425 and returns to a scanning/monitoring mode in step 410.

If, however, the signal processor of the DMO MS determines that the gateway or repeater is usable by the DMO MS, in step 420, the signal processor of the DMO MS extracts the URT type from this signal, as shown in step 430. The signal processor then adds a gateway/repeater identifier to a list of usable gateways/repeaters contained within a memory element of the DMO MS, as shown in step 435. The signal processor then determines whether the address element of the URT is known by the DMO MS to be a GTSI, as shown in step 440. If the signal processor determines that the address element of the URT is known by the DMO MS to be a GTSI in step 440, the signal processor adds this GTSI to a list of groups supported by the respective gateway or repeater, as shown in step 445. In this manner, the DMO MS is able to build up a comprehensive understanding of the capabilities of, and particularly talk groups supported by, the respective gateways or repeaters.

If the signal processor determines that the address element of the URT is not known by the DMO MS to be a GTSI in step 440, e.g. it is an individual address (ITSI), the signal processor assumes that the single DMO MS with this ITSI is allowed to initiate individually addressed services to any other ITSI. As an ITSI is used, the identified DMO MS will not be able to request calls addressed to a group, as the group addressed call will fail if it is not supported (temporarily or permanently) by the gateway or repeater.

Alternatively, if the signal processor determines that the address element of the URT is known by the DMO MS to be a GTSI in step 440, all DMO MSs that are members of this group are allowed to initiate group addressed services to that GTSI. Alternatively, these DMO MSs may initiate individually addressed service to any destination ITSI. Notably, there is no limitation imposed on initiating calls to any individual address, since these should always be supported by gateways and repeaters.

Alternatively, if the signal processor determines that the address element of the URT is known by the DMO MS to indicate a 'restricted to single MNI', all DMO MSs that are members of this MNI are allowed to initiate individually addressed services to any destination ITSI. Similarly, if the signal processor determines that the address element of the URT is known by the DMO MS to indicate 'no restrictions', all DMO MSs are allowed to initiate individually addressed services to any destination ITSI.

Once the URT has been extracted, irrespective of whether the signal processor determines it contains a GTSI or not in step 440, the signal processor determines whether there are any more address elements in the presence signal, as shown in step 450. If there are more address elements in the presence signal, in step 450, the signal processor determines whether such further address elements in the URT of the presence signal are known by the MS to be a GTSI, as shown in step 440. Otherwise, the process ends for this received communication in step 460.

Thus, in this manner, the known problem of a DMO MS not knowing which group addresses are supported by respective gateways or repeaters (i.e. which one have a DMO group address that has an attached (corresponding) TMO group), which leads to a request for service being rejected, is resolved. By implementing the inventive concepts described herein, this problem is resolved when the MS receives presence signals with information relating to supported GTSI(s) in the URT element, as it knows that the intermediary (gateway or repeater) communication unit supports calls to this GTSI. It is envisaged that the MS will not use an intermediary communication unit for group calls if that intermediary communication unit has not published its group capability in a GTSI in the URT. Consequently, and advantageously, the DMO MS will not load the channel with failed attempts.

Furthermore, in this manner, the known problem of a DMO MS selecting an inappropriate gateway or repeater from a number of prospective gateways or repeaters to route a communication to a given destination address, is resolved. By implementing the inventive concepts described herein, this problem is resolved as the MS is able to prepare a local list of the capabilities of the gateways and repeaters and identify the GTSIs that they each support. Thus, the DMO MS is capable of selecting the correct gateway or repeater for a desired GTSI.

Furthermore, in this manner, the aforementioned problem associated with several gateways or repeaters existing on the same channel, where some are connected to the same network and support the same TMO group(s), is resolved. In this scenario, the known approach could lead to all these gateways setting up simultaneously the same call on the same DMO channel. However, in accordance with the preferred embodiment of the present invention, as a gateway has transmitted details of its supported GTSI addresses, it is envisaged that another gateway could detect this message, and temporarily stop supporting the same addresses.

Thus, the TETRA DMO presence signal has been adapted to include a new definition of a URT element, which indicates the supported destination address(es) and particularly supported GTSIs. In this regard, the mobile subscriber units know the addressing capabilities of the intermediary communication unit(s). The mobile subscriber units will therefore avoid using an intermediary communication unit that does not support the required addresses, and will therefore be able to select a suitable intermediary communication unit automatically when several options are present.

It is within the contemplation of the present invention that the inventive concepts are not limited to use of a usage restriction element in a presence signal and may equally be applied to any message, i.e. by means of a flag, within any appropriate signal.

It will be understood that the DMO communication system, DMO wireless subscriber communication unit, DMO intermediary communication unit and method of communicating by supporting group calls therein, as described above, provide at least one or more of the following advantages:
(i) Avoids failed transmissions of messages sent towards an intermediary device that does not support the requested address;
(ii) More functionality of the TETRA URT field; and
(iii) An ability to fully support group addresses in a DMO environment using the URT field.

Whilst specific, and preferred, implementations of the present invention are described above, it is clear that one skilled in the art could readily apply variations and modifications of such inventive concepts.

Thus, in summary, the preferred embodiment of the present invention proposes a mechanism to fully support group addresses in a DMO environment using the URT field. The preferred embodiments of the present invention provide a DMO communication system, a DMO wireless subscriber communication unit, a DMO intermediary unit and method of supporting group calls therein, which substantially alleviates the aforementioned problems with prior art mechanisms.

## Claims

1. A wireless subscriber communication unit (300) capable of communication on a direct mode communication system (100), wherein the wireless subscriber communication unit (300) comprises:
a receiver for receiving a message relayed from an intermediary communication unit (150); and
a signal processor (308), operably coupled to the receiver, for processing the received message;
wherein the wireless subscriber communication unit (300) is **characterised by** the signal processor (308) comprising a group call processing function (340) configured to identify from the received message one or more call groups supported by the intermediary communication unit (150) .

2. A wireless subscriber communication unit (300) according to Claim 1, wherein the received message further includes a destination address for the message.

3. A wireless subscriber communication unit (300) according to Claim 1 or Claim 3, wherein the received message comprises a usage restriction type field in a presence signal.

4. A wireless subscriber communication unit (300) according to any preceding Claim, wherein the intermediary communication unit is a gateway or repeater such that the message identifies one or more call groups supported by the gateway or repeater.

5. A wireless subscriber communication unit (300) according to any preceding Claim, wherein the wireless subscriber communication unit (300) is capable of communicating in a TETRA direct mode of operation.

6. An intermediary communication unit (150) capable of routing communication on a direct mode communication system (100), wherein the intermediary communication unit comprises:
a transceiver (158); and
a signal processor (155), operably coupled to the transceiver (158), for processing a received message comprising a usage restriction element;
wherein the intermediary communication unit (150) is **characterised by** the signal processor (155) being configured to automatically update the received message such that a re-transmitted message comprises an indication of a number of call groups supported by the intermediary communication unit (150).

7. An intermediary communication unit (150) according to Claim 6, further **characterised in that** the received message comprises a usage restriction element that is automatically updated in messages routed through the intermediary communication unit (150).

8. An intermediary communication unit (150) according to Claim 6 or Claim 7, wherein the signal processor (155) automatically updates a set of call groups according to groups supported by the intermediary communication unit (150) on a currently attached trunked communication network.

9. An intermediary communication unit (150) according to any of preceding Claims 6 to 8, wherein the intermediary communication unit (150) is capable of communicating in a TETRA direct mode of operation.

10. A method (400) of communicating in a wireless direct mode communication system supporting communication between a number of wireless communication units via an intermediary communication unit, wherein the method comprises the steps of:
monitoring (410) a communication channel by a wireless subscriber communication unit; and
processing a message received from an intermediary communication unit;
wherein the method is **characterised by** the step of:
determining (420), in response to the processed message, whether the intermediary communication unit supports a number of call groups and is usable by the wireless subscriber communication unit.

11. A method (400) of communicating in a wireless direct mode communication system according to Claim 10,wherein the method is further **characterised by** the step of:
adding (435) an identifier to a list of usable intermediary communication units contained within a memory element of the wireless subscriber communication unit to indicate that the intermediary communication unit is usable by the wireless subscriber communication unit for communication to one or more call groups.

12. A method (400) of communicating in a wireless direct mode communication system according to Claim 10 or Claim 11, wherein the message comprises a usage restriction type field in a presence signal, the method further **characterised by** the steps of:
determining (440) a group identifier of the usage restriction type element; and
adding (445) the group identifier to a list of groups supported by the respective intermediary communication unit.

13. A method (400) of communicating in a wireless direct mode communication system according to any of preceding Claims 10 to 12, the method further **characterised by** the step of discarding (425) the identifier if the intermediary communication unit is unusable by the wireless subscriber communication unit.

14. A method (400) of communicating in a wireless direct mode communication system according to any of preceding Claims 10 to 13, wherein the intermediary communication unit is a gateway or repeater for use in a TETRA direct mode communication system.

15. A storage medium storing processor-implementable instructions for controlling a processor to carry out the method of any of Claims 10 to 14.

16. A radio frequency transmission message sent from an intermediary communication unit (150) to a wireless subscriber communication unit (130) on a wireless direct mode communication system (100), wherein the radio frequency transmission message comprises an element indicating one or more call groups supported by the intermediary communication unit (150).

17. A radio frequency transmission message according to Claim 16, wherein the radio frequency transmission message supplements the TETRA direct mode protocol set.

18. A wireless direct-mode intermediary communication unit (150) adapted to transmit the radio frequency transmission message of Claim 16 or Claim 17.

19. A wireless direct-mode communication system (100) adapted to support group call communication between a wireless subscriber communication unit (130) and an intermediary communication unit (150) according to any of preceding Claims 1 to 9, or a method of communicating (400) according to any of preceding Claims 10 to 14, or transmission of a radio frequency transmission message according to Claim 16 or Claim 17.
